# Europäisches Patentamt

# European Patent Office

# Office européen des brevets

(11) Veröffentlichungsnummer: **0 203 943**
**B1**

(12) **EUROPÄISCHE PATENTSCHRIFT**

(45) Veröffentlichungstag der Patentschrift:
24.05.89

(21) Anmeldenummer: 85905756.4

(22) Anmeldetag: 04.12.85

(86) Internationale Anmeldenummer:
PCT/CH 85/00171

(87) Internationale Veröffentlichungsnummer:
WO 86/03643 (19.06.86 Gazette 86/13)

(51) Int. Cl.⁴: **H 04 L 27/14**

(54) **VERFAHREN UND SCHALTUNSANORDNUNG ZUM DETEKTIEREN DER INFORMATION EINES EMPFANGSSIGNALS.**

(30) Priorität: 07.12.84 CH 5815/84

(43) Veröffentlichungstag der Anmeldung:
10.12.86 Patentblatt 86/50

(45) Bekanntmachung des Hinweises auf die Patenterteilung:
24.05.89 Patentblatt 89/21

(84) Benannte Vertragsstaaten:
AT BE CH DE FR GB IT LI LU NL SE

(56) Entgegenhaltungen:
EP-A- 0 076 095
DE-B- 1 190 495
GB-A- 1 172 975
GB-A- 2 057 820
US-A- 3 826 990
US-A- 4 475 219

(73) Patentinhaber: **Gesellschaft zur Förderung der industrieorientierten Forschung an den Schweizerischen Hochschulen und weiteren Institutionen, Wildhainweg 21, CH-3012 Bern (CH)**

(72) Erfinder: **GUBSER, Andrea, Neuwiesenstrasse 9, CH-8610 Uster (CH)**

(74) Vertreter: **Scheidegger, Zwicky, Werner & Co., Stampfenbachstrasse 48 Postfach, CH-8023 Zürich (CH)**

## Beschreibung

Die vorliegende Erfindung betrifft ein Verfahren zum Detektieren einer durch Frequenzumtastung (FSK) modulierten binären Information eines Empfangssignals sowie eine elektrische Schaltungsanordnung zum Durchführen des Verfahrens.

Verschiedene Schaltungsanordnungen für den Empfang und zum Detektieren von durch Frequenzumtastung (FSK) modulierten binären Signalen sind bereits bekannt. So haben z. B. John M. Wozencraft und Irwin M. Jacobs im Buch «Principles of Communication Engineering», John Wiley and Sons, New York, 1965, Empfänger-Schaltungsanordnungen beschrieben, welche die Energie des Empfangssignals jeweils über eine Bitperiode auf den die beiden binären Symbole «O» und «1» repräsentierenden Frequenzen $f_0$ und $f_1$ akkumulieren, wobei jeweils die Frequenz mit der höheren Signalenergie den Schätzwert (Estimation Value) des betreffenden Informationssymbols liefert. Im genannten Buch ist auch schon die Demodulation des Empfangssignals in ein erstes Quadratursignal und ein um 90° phasenverschobenes zweites Quadratursignal beschrieben. Diese Quadratursignale haben jeweils die gleiche Frequenz, die gleich der Differenz zwischen der momentanen Frequenz des Empfangssignals und einer konstanten Mittelfrequenz ist. Bei jeder Frequenzumtastung des Empfangssignals erfolgt ein Phasenvorsprung der Quadratursignale, so daß das erste Quadratursignal dem zweiten Quadratursignal einmal voreilt und das andere mal nacheilt.

In der unter der Nummer 0 076 095 veröffentlichten europäischen Patentanmeldung ist eine Schaltungsanordnung offenbart, bei welcher die beiden Quadratursignale nach Umwandlung in Rechtecksignale je in eine Sequenz von Abtastwerten konstanter Amplitude konvertiert werden, wobei die Abtastungen jeweils bei den Nulldurchgängen der Rechtecksignale erfolgen. Jede Verschiebung der Zeitintervalle zwischen den Abtastwerten läßt dann auf das Vorliegen einer Frequenzumtastung des Empfangssignals schließen.

Diese bekannten Schaltungsanordnungen und Demodulationsverfahren sind zwar theoretisch optimal, in ihrer praktischen Realisierung jedoch sehr anfällig auf Nichtidealitäten der verwendeten Oszillatoren und Filter sowie auf Abweichungen der Sendefrequenzen von ihren Sollwerten.

Die Aufgabe der vorliegenden Erfindung ist es nun, ein Verfahren und eine Schaltungsanordnung der eingangs genannten Art derart auszugestalten, daß das Detektieren einer durch Frequenzumtastung modulierten binären Information eines Empfangssignals auf verhältnismäßig einfache Weise und mit relativ geringem Energieverbrauch auch unter nicht idealen Bedingungen ermöglicht ist, insbesondere auch dann, wenn das Empfangssignal erhebliche Anteile von unerwünschten Störungen aufweist, die dem die Information enthaltenden Nutzsignal überlagert sind, wie z.B. Rauschen und Funkenstörungen.

Diese Aufgabe ist erfindungsgemäß durch das Verfahren gemäß den Patentansprüchen 1 und 2 sowie durch die elektrische Schaltungsanordnung gemäß den Patentansprüchen 3 bis 7 gelöst.

In der nun folgenden Beschreibung ist die Erfindung anhand der beigefügten Zeichnung rein beispielsweise näher erläutert.

Fig. 1 zeigt schematisch eine Schaltungsanordnung zum Detektieren der binären Information in einem durch Frequenzumtastung (FSK) modulierten Empfangssignal;

Fig. 2 ist ein Diagramm zur Veranschaulichung der Wirkungsweise der Schaltungsanordnung gemäß Fig. 1 und zeigt verschiedene elektrische Signale in Abhängigkeit von der Zeit.

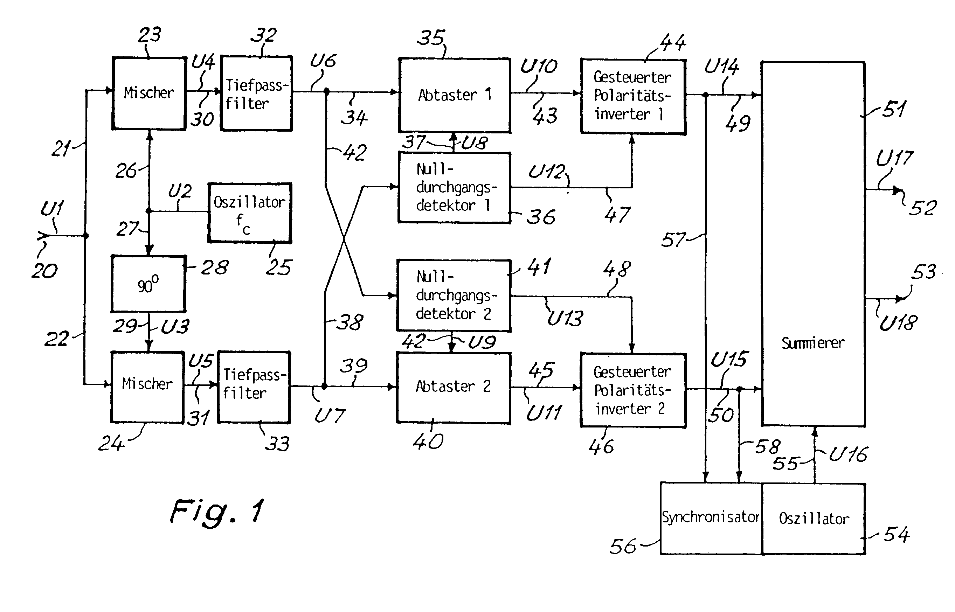

Die in Fig. 1 dargestellte Schaltungsanordnung weist einen Signaleingang 20 für das gegebenenfalls vorverstärkte hochfrequente Empfangssignal U1 auf, das durch Frequenzumtastung (Frequency-Shift-Keying FSK) zwischen zwei Frequenzen $f_0$ und $f_1$ moduliert ist. Der Signaleingang 20 ist über Leitungen 21 und 22 mit einem Eingang eines ersten Mischers 23 und einem Eingang eines zweiten Mischers 24 verbunden. Ein Oszillator 25 erzeugt eine Sinusschwingung U2 mit einer konstanten Mittenfrequenz $f_c = (f_0 + f_1)/2$ und ist über eine Leitung 26 mit einem zweiten Eingang des ersten Mischers 23 und über eine Leitung 27 mit einer Phasenschieber-Einrichtung 28 verbunden. Am Ausgang der Phasenschieber-Einrichtung 28 liegt eine um 90° gegenüber der Schwingung U2 phasenverschobene Sinusschwingung U3 mit gleicher Frequenz $f_c$. Über eine Leitung 29 ist die Schwingung U3 einem zweiten Eingang des zweiten Mischers 24 zugeleitet. Die beiden Mischer 23 und 24 erzeugen Mischprodukte U4 und U5, die je über eine Leitung 30 bzw. 31 einem ersten Tiefpaßfilter 32 bzw. einem zweiten Tiefpaßfilter 33 zugeleitet sind. An den Ausgängen der beiden Tiefpaßfilter 32 und 33 liegen zwei sinusförmig verlaufende Quadratursignale U6 und U7, die beide die Deviationsfrequenz $\Delta f = (f_0 - f_1)/2$ aufweisen, aber in bezug aufeinander um 90° phasenverschoben sind. Die beschriebene Transformation des Empfangssignals U1 in einem Schritt in ein Niederfrequenzband ist als Direktumwandlung (Direct Conversion) bekannt.

Das erste Quadratursignal U6 ist über eine Leitung 34 einem Momentanwertabtaster 35 zugeleitet, der durch ein elektrisches Steuersignal U8 steuerbar ist. Letzteres wird von einem Nulldurchgangsdetektor 36 erzeugt und über eine Leitung 37 an einen Steuereingang des Abtasters 35 geliefert. Dem Nulldurchgangsdetektor 36 ist das zweite Quadratursignal U7 über eine Leitung 38 zugeführt. Der Abtaster 35 und der Nulldurchgangsdetektor 36 sind derart ausgebildet, daß bei jedem Nulldurchgang des zweiten Quadratursignals U7 eine Abtastung des Momentanwertes des ersten Quadratursignals U6 erfolgt. In völlig analoger Weise ist das zweite Quadratursignal U7 über eine Leitung 39 einem zweiten Momentanwertabtaster 40 zugeleitet, der durch ein elektrisches Steuersignal U9 steuerbar ist. Letzteres wird von einem zweiten Nulldurchgangsdetektor 41 erzeugt und über eine Leitung 42 einem Steuereingang des zweiten Abtasters 40 zugeleitet. Dem zweiten Nulldurchgangsdetektor 41 ist das erste Quadratursignal U6 über eine Leitung 42 zugeführt. Der zweite Abtaster 40 und der zweite Nulldurchgangsdetektor 41 sind derart ausgebildet, daß bei jedem Nulldurchgang des ersten Quadratursignals U6 eine Abtastung des Momentanwertes des zweiten Quadratursignals U7 erfolgt.

Die vom ersten Abtaster 35 erzeugte Sequenz von Abtastwerten U10 ist über eine Leitung 43 einem gesteuerten Polaritätsinverter 44 zugeführt, und die vom zweiten Abtaster 40 erzeugte Sequenz von Abtastwerten U11 ist über eine Leitung 45 einem zweiten gesteuerten Polaritätsinverter 46 zugeleitet. Der erste Nulldurchgangsdetektor 36 ist weiter derart ausgebildet, daß er jeweils ein Steuersignal U12 erzeugt, wenn das zweite Quadratursignal U7 einen Nullpunkt in einer bestimmten Richtung, z.B. von minus nach plus, durchläuft. Dieses Steuersignal U12 ist über eine Leitung 47 einem Steuereingang des ersten Polaritätsinverters 44 zugeführt. Ähnlich ist der zweite Nulldurchgangsdetektor 41 derart ausgebildet, daß er jeweils ein Steuersignal U13 erzeugt, wenn das erste Quadratursignal U6 einen Nullpunkt in entgegengesetzter Richtung, z.B. von plus nach minus, durchläuft, und dieses Steuersignal U13 ist über eine Leitung 48 einem Steuereingang des zweiten Polaritätsinverters 46 zugeleitet. Demgemäß erfolgt die Steuerung der beiden Polaritätsinverter 44 und 46 nach einander entgegengesetzten Regeln. An den Ausgängen der Polaritätsinverter 44 und 46 erscheinen Sequenzen von Abtastwerten U14 bzw. U15 mit angepaßten Polaritäten, wie noch erläutert werden wird.

Die Ausgänge der Polaritätsinverter 44 und 46 sind mittels Leitungen 49 und 50 mit zwei Eingängen eines Summierers 51 verbunden, der durch ein Taktsignal U16 steuerbar ist und zwei Signalausgänge 52 und 53 aufweist. Der Summierer 52 ist im übrigen derart ausgebildet, daß jeweils während einer durch das Taktsignal U16 gesteuerten Zeitdauer die zugeführten Abtastwerte U14 und U15 algebraisch addiert und dann am Signalausgang 52 ein dem Vorzeichen der erhaltenen Summe entsprechendes elektrisches Signal U17 und am Signalausgang 53 ein dem Betrag der Summe entsprechendes elektrisches Signal ausgibt. Zum Erzeugen des Taktsignals U16 für die Steuerung des Summierers 51 ist ein Oszillator 54 vorhanden, dessen Ausgang über eine Leitung 55 mit einem Steuereingang des Summierers 51 verbunden ist. Dem Oszillator 54 ist ein Synchronisator 56 beigeordnet, der zwei über Leitungen 57 und 58 mit den Ausgängen der Polaritätsinverter 44 und 46 verbundene Signaleingänge aufweist. Der Synchronisator 56 enthält zweckmäßig einen Phasenkorrektur-Estimator, der imstande ist, die Phase des Oszillators 54 mit den Zeitpunkten der Frequenzumtastung des Empfangssignals U1 zu vergleichen und auftretende Abweichungen durch entsprechende Beeinflussung des Oszillators 54 gegen Null zu korrigieren. Vorzugsweise ist der Oszillator 54 ein Quarzoszillator, dessen Schwingungsperiode abgestimmt ist auf senderseitig normierte einheitliche Zeitintervalle zwischen Zeitpunkten, in denen Frequenzumtastungen möglich sind.

Die Wirkungsweise der beschriebenen Schaltungsanordnung nach Fig. 1 und das mit der Schaltungsanordnung durchführbare Verfahren zum Detektieren der Information des Empfangssignals U1 sind beispielsweise im wesentlichen wie folgt:

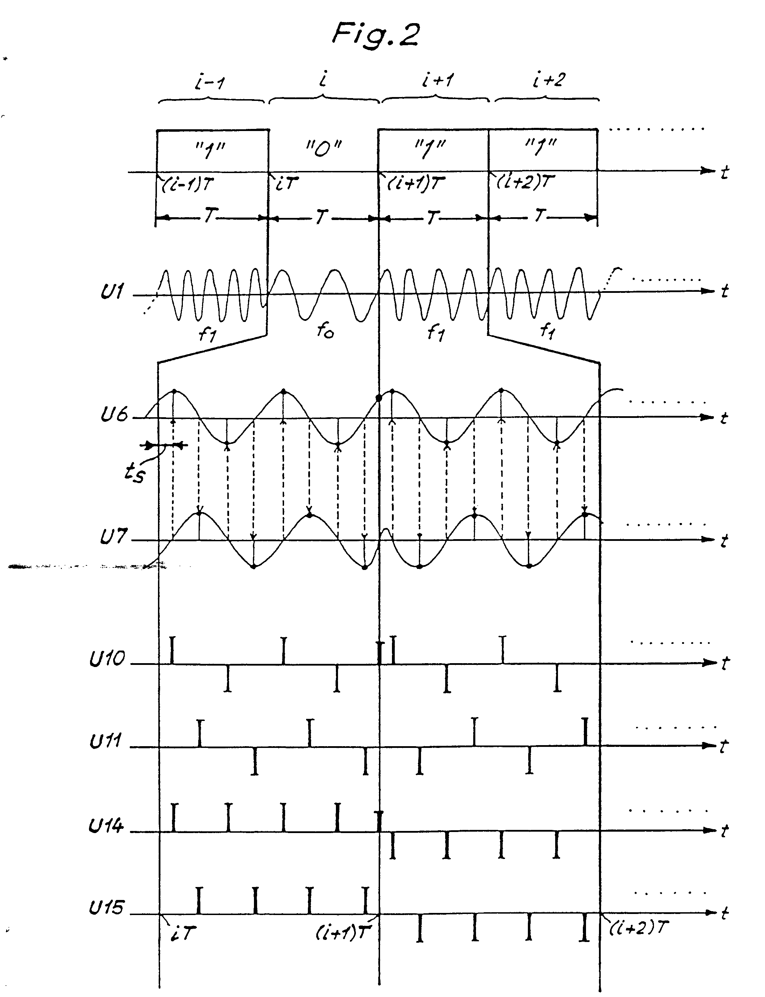

Das durch Frequenzumtastung modulierte Empfangssignal U1 weist die Frequenz $f_0$ oder $f_1$ auf, je nachdem, ob das Empfangssignal das Informationssymbol «0» oder «1» repräsentiert. Demgemäß enthält das Empfangssignal U1 eine binäre Datensequenz. Die Zeitdauer T der einzelnen Bit-Intervalle ist konstant und senderseitig festgelegt. T ist somit die Bit-Periode. In Fig. 2 oben sind einige Bit-Intervalle i-1, i, i+1, i+2 eines binären Informationssignals mit der Symbolfolge «1», «0», «1», «1» sowie der dieser Symbolfolge entsprechende Abschnitt des Empfangssignals U1 dargestellt.

In den Mischern 23 und 24 wird das Empfangssignal U1 mit dem vom Oszillator 25 erzeugten Mittenfrequenzsignal U2 bzw. U3 gemischt. Die dabei entstehenden Mischprodukte U4 und U5 haben die Deviationsfrequenz $\Delta f = f_0 - f_c = f_c - f_1$ wobei $f_c = (f_0 + f_1)/2$ die Frequenz der vom Oszillator 25 erzeugten Sinusschwingung ist. Durch die Tiefpaßfilter 32 und 33 werden die höheren Mischprodukte mit den Frequenzen $f_0 + f_c$ bzw. $f_1 + f_c$ unterdrückt, so daß an den Ausgängen der Tiefpaßfilter die Quadratursignale U6 und U7 mit der Deviationsfrequenz $\Delta f = (f_0 - f_1)/2$ erscheinen. Wie bereits erwähnt, sind die beiden Quadratursignale U6 und U7 in bezug aufeinander um 90° phasenverschoben. Wenn das Empfangssignal U1 in einem Bit-Intervall die das Symbol «0» repräsentierende Frequenz $f_0$ aufweist, eilt die Sinusschwingung des ersten Quadratursignals U1 der Sinusschwingung des zweiten Quadratursignals U7 um 90° voraus. Wenn hingegen das Empfangssignal U1 in einem Bit-Intervall die das Symbol «1» repräsentierende Frequenz $f_1$ aufweist, eilt die Sinusschwingung des ersten Quadratursignals U6 der Sinusschwingung des zweiten Quadratursignals U7 um 90° nach. Eine Ermittlung oder Schätzung der unterschiedlichen Phasenlagen der Sinusschwingungen der beiden Quadratursignale U6 und U7 ist demzufolge gleichbedeutend wie eine Schätzung des im Empfangssignal U1 enthaltenen Informationssymbols. Aus der Kenntnis der Phasenlage kann daher eindeutig auf das jeweils empfangene Informationssymbol geschlossen werden.

Zur Verdeutlichung des Gesagten sind in Fig. 2 die beiden Quadratursignale U6 und U7 in den Bit-Intervallen i und i+1 mit gedehnter Zeitachse dargestellt. Man erkennt deutlich die Änderung der unterschiedlichen Phasenlagen beim Übergang vom Informationssymbol «0» zum Informationssymbol «1» im Zeitpunkt (i+1) T. Die Sinusschwingung U2 des Oszillators 25 kann natürlich in den Zeitpunkten i.T, (i+1)T, (i+2)T, in denen jeweils eine Frequenzumtastung des Empfangssignals U1 möglich ist, irgendeine Phasenlage haben, weshalb im allgemeinen weder die Nullpunkte noch die Maxima des einen oder des andern Quadratursignals U6 bzw. U7 mit den genannten Zeitpunkten koinzidieren. Dies ist in Fig. 2 durch eine Zeitdauer ts nach dem Zeitpunkt i.T am Anfang des Bit-Intervalls i veranschaulicht.

In der Praxis sind dem Empfangssignal U1 unerwünschte Störsignale überlagert, weshalb dann die beiden Quadratursignale U6 und U7 nicht nur die in Fig. 2 gezeichneten Sinusschwingungen, sondern zusätzlich auch diesen Sinusschwingungen überlagerte Störsignale mit irgendwelchen Frequenzen aufweisen, wobei die Amplituden der Störsignale gegebenenfalls größer als die Amplituden der Sinusschwingungen sein können. Für die Detektion der Information des Empfangssignals U1 ist es nötig, in jedem Bit-Intervall die in den Quadratursignalen U6 und U7 enthaltenen Anteile der Schwingungen mit der Frequenz $\Delta f$ zu erkennen, im folgenden Nutzsignalanteile genannt.

Ist im Bit-Intervall i der Nutzsignalanteil im Quadratursignal U6 bekannt, lautet die optimale ML (Maximum Likelihood) Estimationsregel für das i-te Informationssymbol:

$$S = \int_{iT}^{(i+1)T} u_c(t)\cos(2\pi\,\Delta f(t-t_s) - \pi/2)\,dt \underset{H_1}{\overset{H_0}{\underset{<}{\gtrless}}} 0$$

In dieser Formel bedeutet $u_c(t)$ das Quadratursignal U7 als Funktion der Zeit und $\cos(2\pi\,\Delta f(t-t_s) - \pi/2)$ der bei einem gesendeten Informationssymbol «0» erwartete Nutzsignalanteil im Quadratursignal U7. T und $t_s$ haben die bereits erwähnten Bedeutungen. Die Buchstaben S und H stehen für «Statistik» bzw. «Hypothese».

Wenn $S \geqq 0$, wird auf ein gesendetes Informationssymbol «0» geschätzt, im andern Fall auf ein gesendetes Informationssymbol «1».

Wenn diese Berechnung mit zeitdiskreten Werten, z.B. mittels einer Rechenmaschine, durchgeführt werden soll, lautet die Schätzregel:

$$S_d = \sum_{j=1}^{N=T/T_a} u_c(iT + jT_a)\cdot\cos(2\pi\,\Delta f(iT + jT_a - t_s) - \pi/2) \underset{H_1}{\overset{H_0}{\underset{<}{\gtrless}}} 0$$

Darin bedeutet $T_a$ die Unterperiode oder Abtastperiode, mit welcher das Quadratursignal U7 innerhalb einer Bit-Periode T abgetastet wird, was pro Bit-Periode N mal geschieht.

Gemäß dieser Schätzregel wird also innerhalb einer Bit-Periode T der Momentanwert des Quadratursignals U7 N mal abgetastet, die erhaltenen Abtastwerte werden mit festen Koeffizienten entsprechend den Funktionswerten des erwarteten Nutzsignalanteils bei einem gesendeten Informationssymbol «0» gewichtet, und alle N so gebildeten Produkte werden aufsummiert. Überall dort, wo der Betrag des erwarteten Nutzsignalanteils bei einem gesendeten Symbol «0» gleich 1 ist, werden die Abtastwerte betragsmäßig maximal gewichtet. Wenn man für die Schätzung nur Abtastwerte an diesen Stellen verwendet, können die Multiplikationen der Gewichtung durch Additionen und Subtraktionen ersetzt werden. Da hierbei nur diejenigen Abtastwerte verwendet werden, die bei der Summation am meisten gewichtet werden, liegt das Ergebnis dieses Verfahrens nahe beim Optimum.

Wegen der 90° Phasenverschiebung zwischen den Sinusschwingungen U2 und U3 haben die Nutzsignalanteile der beiden Quadratursignale U6 und U7 jeweils dort ihr Maximum oder Minimum, wo der Nutzsignalanteil des andern Quadratursignals U7 bzw. U6 einen Nullpunkt durchläuft. Statt die Phase des Nutzsignalanteils eines der Quadratursignale U6 und U7 zu detektieren und danach die relative Phasenlage des Nutzsignalanteils des andern Quadratursignals U7 bzw. U6 zu schätzen, können einfach die Zeitpunkte der Nulldurchgänge des einen Quadratursignals U6 bzw. U7 als Zeitpunkte für die Abtastung des andern Quadratursignals U7 bzw. U6 benutzt werden.

Demgemäß wird in der Schaltungsanordnung nach Fig. 1 der Momentanwert des ersten Quadratursignals U6 mittels des Abtasters 35, der durch den Nulldurchgangsdetektor 36 gesteuert ist, immer dann abgetastet, wenn das zweite Quadratursignal U7 einen Nullpunkt durchläuft. Umgekehrt wird der Momentanwert des zweiten Quadratursignals U7 mittels des zweiten Abtasters 40, der durch den zweiten Nulldurchgangsdetektor 41 gesteuert ist, immer dann abgetastet, wenn das erste Quadratursignal U6 einen Nullpunkt durchläuft. Die erhaltenen Sequenzen der Abtastwerte U10 bzw. U11 sind in Fig. 2 veranschaulicht. Man erkennt, daß innerhalb einer einzelnen Bit-Periode die Abtastwerte abwechselnde Polaritäten aufweisen.

Mittels der gesteuerten Polaritätsinverter 44 und 46 werden die Abtastwerte teils invertiert und teils nicht invertiert. Als Kriterium, ob der Abtastwert invertiert oder unverändert belassen wird, dient die Richtung des jeweiligen Nulldurchganges des andern Quadratursignals. Im Beispiel gemäß Fig. 2 werden Abtastwerte U10 des ersten Quadratursignals U6 immer dann invertiert, wenn das zweite Quadratursignal U7 einen Nullpunkt von plus nach minus durchläuft, wogegen die Abtastwerte des zweiten Quadratursignals U7 immer dann invertiert werden, wenn das erste Quadratursignal U6 einen Nullpunkt von minus nach plus durchläuft. Demgemäß enstehen am Ausgang der Polaritätsinverter 44 und 46 Sequenzen von Abtastwerten U14 und U15 mit angepaßten Polaritäten, wie in Fig. 2 unten ersichtlich ist. Man erkennt, daß innerhalb des Bit-Intervalls i, während welchem das Informationssymbol «0» gesendet wird, alle angepaßten Abtastwerte U14 und U15 positive Polarität und innerhalb des Bit-Intervalls i + 1, während welchem das Informationssymbol «1» gesendet wird, alle angepaßten Abtastwerte U14 und 15 negative Polarität aufweisen.

Wenn das Empfangssignal U1 und damit auch die beiden Quadratursignale U6 und U7 nicht frei sind von Störsignalen, weisen die Abtastwerte U14 und U15 gegebenfalls unterschiedliche Beträge auf und sind die Zeitpunkte der Nulldurchgänge der Quadratursignale möglicherweise unregelmäßig verschoben. Da jedoch die Sinusschwingungen in ihren Nulldurchgängen jeweils die größte Steigung haben und die Abtastung in den flachsten Bereichen der Nutzsignalanteile erfolgt, ermöglichen die auf die beschriebene Art gewonnenen Abtastwerte selbst bei einem verrauschten und mit Störsignalen behafteten Empfangssignal U1 eine gute Näherung der optimalen Schätzregel.

Im Summierer 51 werden während jedes Bit-Intervalles die Abtastwerte U14 und U15 mit angepaßten Polaritäten algebraisch addiert, wonach am Signalausgang 52 ein das Vorzeichen der resultierenden Summe repräsentierendes elektrisches Signal und am Signalausgang 53 ein den Betrag der Summe repräsentierendes elektrisches Signal erscheinen. Das Vorzeichen der resultierenden Summe bestimmt das geschätzte Informationssymbol «0» oder «1», während der Betrag der Summe ein Maß für die Qualität der gemachten Schätzung ist.

Die Steuerung des Summierers 51 erfolgt mittels des vom Oszillator 54 erzeugten Taktsignals U16, das mit der Bit-Periode T synchronisiert wird. Für die Synchronisierung wird jeweils der Polaritätswechsel der Abtastwerte U14 und U15 zwischen den aufeinanderfolgenden Bit-Intervallen benutzt. Die Abtastwerte U14 und U15 werden über die Leitungen 57 und 58 dem Synchronisator 56 zugeführt, der die Zeitpunkte der Polaritätswechsel der Abtastwerte U14 und U15 mit den Zeitpunkten der den Summierer 51 steuernden Flanken des Taktsignals U16 vergleicht und allenfalls vorhandene Abweichungen durch eine entsprechende Beeinflussung der Phase des Taktsignals U16 gegen Null korrigiert. Auf diese Weise wird erreicht, daß die Flanken des Taktsignals U16 mit den Zeitpunkten i.T, (i + 1)T, (i + 2)T usw. zwischen den aufeinanderfolgenden Bit-Intervallen mit ausreichender Genauigkeit zeitlich zusammenfallen.

Für den Fachmann ist klar, daß auch andere schaltungstechnische Maßnahmen zur Erzeugung des den Summierer 51 steuernden Taktsignals U16 möglich sind. Es ist auch denkbar, das Taktsignal U16 vom Sender her zu übertragen, sei es auf einem separaten Steuerkanal oder dem Empfangssignal U1 überlagert. Weil die vorliegende Erfindung aber das Ziel verfolgt, die Information des Empfangssignals U1 auch bei schlechter Übertragungsqualität dieses Signals zu detektieren, ist davon auszugehen, daß auch die Übertragung des Taktsignals U16 vom Sender her mit unzulänglicher Qualität erfolgen könnte und dann die Schätzung der Information des Empfangssignals negativ beeinträchtigt würde. Daher wird die Erzeugung des Taktsignals U16 am Ort des Empfängers bevorzugt.

In vereinfachender Abänderung der beschriebenen Schaltungsanordnung gemäß Fig. 1 ist es möglich, den zweiten Abtaster 40, den zweiten Nulldurchgangsdetektor 41 und den zweiten Polaritätsinverter 46 wegzulassen und lediglich Abtastwerte U14 aus dem ersten Quadratursignal U6 jeweils bei den Nulldurchgängen des zweiten Quadratursignals U7 zu erzeugen und im Summierer 51 zu addieren. Umgekehrt könnten auch der Abtaster 35, der Nulldurchgangsdetektor 36 und der Polaritätsinverter 44 weggelassen sein, so daß dann nur Abtastwerte U15 aus dem zweiten Quadratursignal U7 jeweils bei den Nulldurchgängen des ersten Quadratursignals U6 gebildet und im Summierer 51 addiert werden. In jedem dieser vereinfachten Fälle ist jedoch die Qualität der erzielten Schätzung der Information des Empfangssignals U1 weniger gut als im Beispiel gemäß Fig. 1 mit kreuzweiser Steuerung der Abtastung beider Quadratursignale U6 und U7, weil im letzteren Fall ein Teil des Informationsverlustes, der wegen der Nichtidealität der Zeitpunkte der Abtastung nur eines der Quadratursignale entstehen kann, ausgeglichen wird.

Zum Schluß ist noch zu erwähnen, daß die Mittenfrequenz $f_c$ der vom Oszillator 25 erzeugten Sinusschwingung U2 in einem beliebigen Frequenzbereich liegen kann, daß aber das Verhältnis der Deviationsfrequenz $\Delta f = (f_o - f_1)/2$ in Hertz zur Datenrate R in Bits pro Sekunde die Bedingung $\Delta f/R \geq \frac{1}{4}$ erfüllen muß.

**Patentansprüche**

1. Verfahren zum Detektieren einer durch Frequenzumtastung (FSK) modulierten binären Information eines Empfangssignals (U1), das zuerst in ein erstes Quadratursignal (U6) und ein um 90° phasenverschobenes zweites Quadratursignal (U7) demoduliert wird, wobei dann jedes der Quadratursignale (U6, U7) in eine Sequenz von Abtastwerten (U10, U11) konvertiert wird, dadurch gekennzeichnet, daß die Sequenz von Abtastwerten (U10, U11) direkt der im jeweiligen Zeitpunkt der Abtastung vorliegenden Amplitude und Polarität des betreffenden Quadratursignals entspricht, wobei die Zeitpunkte der Abtastung in Abhängigkeit von den Nulldurchgängen des jeweils andern Quadratursignals (U7, U6) gesteuert werden, daß die erhaltenen Abtastwerte (U10, U11) in ihrer Polarität entweder unverändert belassen oder invertiert werden in Abhängigkeit von den Richtungen der Nulldurchgänge des jeweils andern Quadratursignals (U7, U6), wobei die Inversion von Abtastwerten (U10) des ersten Quadratursignals (U6) und die Inversion von Abtastwerten (U11) des zweiten Quadratursignals (U7) jeweils bei entgegengesetzten Richtungen der Nulldurchgänge des zweiten Quadratursignals (U7) und des ersten Quadratursignals (U6) gesteuert wird, um innerhalb eines jeden einzelnen Informationsbit-Intervalles (T) des Empfangssignals (U1) aus beiden Quadratursignalen (U6, U7) Abtastwerte (U14, U15) mit angepaßten Polaritäten zu erzeugen, und daß alle Abtastwerte (U14, U15) mit angepaßten Polaritäten innerhalb eines jeden einzelnen Informationsbit-Intervalles (T) des Empfangssignals (U1) algebraisch summiert werden und das Vorzeichen der resultierenden Summe als Schätzung des empfangenen Informationssymbols («0» oder «1») ausgewertet wird.

2. Verfahren nach Anspruch 1, dadurch gekennzeichnet, daß der Betrag der resultierenden Summe aller Abtastwerte (U14, U15) innerhalb eines einzelnen Informationsbit-Intervalles (T) des Empfangssignals (U1) als Maß für die Qualität der Schätzung des empfangenen Informationssymbols («0» oder «1») ausgewertet wird.

3. Elektrische Schaltungsanordnung zum Detektieren einer durch Frequenzumtastung (FSK) modulierten binären Information eines Empfangssignals (U1), insbesondere zur Durchführung des Verfahrens nach Anspruch 1, mit Schaltungsmitteln (21 – 33) zum Demodulieren des Empfangssignals (U1) in ein erstes Quadratursignal (U6) und ein um 90° phasenverschobenes zweites Quadratursignal (U7) und mit Schaltungsmitteln (35, 40) zum Konvertieren eines jeden Quadratursignals (U6, U7) in eine Sequenz von Abtastwerten (U10, U11), dadurch gekennzeichnet, daß die Schaltungsmittel (35, 40) zum Konvertieren der Quadratursignale (U6, U7) eingerichtet sind, um die Abtastwerte (U10, U11) direkt entsprechend der im jeweiligen Zeitpunkt der Abtastung vorliegenden Amplitude und Polarität des betreffenden Quadratursignals zu bilden, daß weitere Schaltungsmittel (36, 41) vorhanden sind zum Steuern der Zeitpunkte der Abtastungen in Abhängigkeit von den Nulldurchgängen des jeweils andern Quadratursignals (U7, U6), daß weitere Schaltungsmittel (44, 46) vorhanden sind zum Invertieren eines Teils der erhaltenen Abtastwerte (U10, U11) in Steuerabhängigkeit von den Richtungen der Nulldurchgänge des jeweils andern Quadratursignals (U7, U6), derart, daß die Inversion von Abtastwerten (U10) des ersten Quadratursignals (U6) und die Inversion von Abtastwerten (U11) des zweiten Quadratursignals (U7) jeweils bei entgegengesetzten Richtungen der Nulldurchgänge des zweiten Quadratursignals (U7) und des ersten Quadratursignals (U6) erfolgt, um innerhalb eines jeden einzelnen Informationsbit-Intervalles (T) des Empfangssignals (U1) aus beiden Quadratursignalen (U6, U7) Abtastwerte (U14, U15) mit angepaßten Polaritäten zu erzeugen, und daß weitere Schaltungsmittel (51, 54, 56) vorhanden sind, um alle Abtastwerte (U14, U15) mit angepaßten Polaritäten innerhalb eines jeden einzelnen Informationsbit-Intervalles (T) algebraisch zu summieren und ein das Vorzeichen der jeweils resultierenden Summe signalisierendes Ausgangssignal (U17) zu erzeugen, welches eine Schätzung des empfangenen Informationssymbols («0» oder «1») repräsentiert.

4. Schaltungsanordnung nach Anspruch 3, dadurch gekenzeichnet, daß die Schaltungsmittel zum Konvertieren eines jeden der Quadratursignale (U6, U7) in eine Sequenz von Abtastwerten (U10, U11) zwei durch Steuersignale (U8, U9) steuerbare Momentanwertabtaster (35, 40) zum Abtasten des ersten bzw. des zweiten Quadratursignals (U6, U7) aufweisen, und daß die Schaltungsmittel zum Steuern der Zeitpunkte der Abtastungen zwei Nulldurchgangsdetektoren (36, 41) zum Ermitteln der Nulldurchgänge des ersten bzw. des zweiten Quadratursignals (U6, U7) und zum Erzeugen der Steuersignale (U8, U9) für die Momentanwertabtaster (35, 40) aufweisen, wobei die von den Nulldurchgängen des ersten Quadratursignals (U6) hergeleiteten Steuersignale (U9) dem Momentanwertabtaster (40) für das zweite Quadratursignal (U7) zugeführt sind, um diesen Momentanwertabtaster (40) zu steuern, und die von den Nulldurchgängen des zweiten Quadratursignals (U7) hergeleiteten Steuersignale (U8) dem Momentanwertabtaster (35) für das erste Quadratursignal (U6) zugeführt sind, um diesen Momentanwertabtaster (35) zu steuern.

5. Schaltungsanordnung nach Anspruch 4, dadurch gekennzeichnet, daß die Schaltungsmittel zum Invertieren eines Teils der Abtastwerte (U10, U11) zwei durch Steuersignale (U12, U13) steuerbare Polaritätsinverter (44, 46) für die Abtastwerte (U10) des ersten Quadratursignals (U6) bzw. für die Abtastwerte (U11) des zweiten Quadratursignals (U7) aufweisen und daß die Nulldurchgangsdetektoren (36, 41) weiter eingerichtet sind zum Erzeugen der Steuersignale (U12, U13) für die Polaritätsinverter (44, 46) in Abhängigkeit von den Richtungen der Nulldurchgänge des zweiten bzw. des ersten Quadratursignals (U7, U6).

6. Schaltungsanordnung nach Anspruch 3, 4 oder 5, dadurch gekennzeichnet, daß die Schaltungsmittel zum algebraischen Summieren der Abtastwerte (U14, U15) mit angepaßten Polaritäten einen durch ein Taktsignal (U16) steuerbaren Summierer (51) mit Eingängen für die vom ersten bzw. vom zweiten Quadratursignal (U6, U7) hergeleiteten Abtastwerte (U14, U15) und mit einem Ausgang für das die Polarität der jeweiligen Summe signalisierende Ausgangssignal (U17) aufweisen und daß zur Erzeugung des den Summierer (51) steuernden Taktsignals (U16) weitere Schaltungsmittel (54, 56 – 58) vorhanden sind, die das Taktsignal (U16) in zeitlicher Übereinstimmung mit dem Beginn und dem Ende eines jeden Informationsbit-Intervalles (T) der binären Information des Empfangssignals (U1) erzeugen.

7. Schaltungsanordnungen nach einem der Ansprüche 3 bis 6, dadurch gekennzeichnet, daß die Schaltungsmittel zum algebraischen Summieren der Abtastwerte (U14, U15) mit angepaßten Polaritäten weiter zur Erzeugung eines zweiten Ausgangssignals (U18) eingerichtet sind, das den Betrag der jeweils resultierenden Summe signalisiert und die Qualität der Schätzung des empfangenen Informationssymbols («0» oder «1») repräsentiert.

**Claims**

1. A method of detecting a binary information modulated by frequency-shift keying (FSK) in a received signal (U1), which is first demodulated into a first quadrature signal (U6) and a second quadrature signal (U7) phase-shifted by 90°, each of the quadrature signals (U6, U7) then being converted to a sequence of sampled values (U10, U11), characterised in that in that the sequence of sampled values (U10, U11) corresponds directly to the amplitude and polarity of the associated quadrature signal at the respective sampling time, the sampling times being controlled in dependence on the zero-axis crossings of the respective other quadrature signal (U7, U6), in that the sampled values (U10, U11) obtained are either left unchanged in respect of their polarity or are inverted in dependence on the directions of the zero-axis crossings of the respective other quadrature signal (U7, U6), the inversion of sampled values (U10) of the first quadrature signal (U6) and the inversion of sampled values (U11) of the second quadrature signal (U7) each being controlled in the case of opposite directions of the zero-axis crossings of the second quadrature signal (U7) and of the first quadrature signal (U6) in order to generate from both quadrature signals (U6, U7) sampled values (U14, U15) with adapted polarities within each individual information bit interval (T) of the received signal (U1), and in that all the sampled values (U14, U15) with adapted polarities within each individual information bit interval (T) of the received signal (U1) are algebraically summated and the sign of the resulting sum is evaluated as an estimation of the received information symbol («0» or«1»).

2. A method according to claim 1, characterised in that the value of the resulting sum of all the sampled values (U14, U15) within an individual information bit interval (T) of the received signal (U1) is evaluated as an index of the quality of the estimation of the received information symbol («0» or «1»).

3. An electrical circuit arrangement for detecting a binary information modulated by frequency-shift keying (FSK) in a received signal (U1), more particularly for performing the method according to claim 1, comprising circuitry (21 – 33) for demodulation of the received signal (U1) into a first quadrature signal (U6) and a second quadrature signal (U7) phase-shifted by 90°, and comprising circuitry (35, 40) for converting each quadrature signal (U6, U7) into a sequence of sampled values (U10, U11), characterised in that the circuitry (35, 40) for converting the quadrature signals (U6, U7) is adapted to form the sampled values (U10, U11) directly in accordance with the amplitude and polarity of the associated quadrature signal at the assiociated sampling time, in that other circuitry (36, 41) is provided for controlling the sampling times in dependence on the zero-axis crossings of the respective other quadrature signal (U7, U6), in that other circuitry (44, 46) is provided for inversion of some of the resulting sampled values (U10, U11) in control dependence on the directions of the zero-axis crossings of the respective other quadrature signal (U7, U6) in such manner that the inversion of sampled values (U10) of the first quadrature signal (U6) and the inversion of sampled values (U11) of the second quadrature signal (U7) each take place in the case of opposite directions of the zero-axis crossings of the second quadrature signal (U7) and of the first quadrature signal (U6) in order to generate from both quadrature signals (U6, U7) sampled values (U14, U15) with adapted polarities within each individual information bit interval (T) of the received signal (U1), and in that further circuitry (51, 54, 56) is provided for algebraic summation of all the sampled values (U14, U15) with adapted polarities within each individual information bit interval (T) and to generate an output signal (U17) signalling the sign of the respective resulting sum, such output signal representing an estimation of the received information symbol «0» or «1».

4. A circuit arrangement according to claim 3, characterised in that the circuitry for converting each of the quadrature signals (U6, U7) into a sequence of sampled values (U10, U11) comprises two instantaneous value samplers (35, 40) controllable by control signals (U8, U9) for sampling the first and the second quadrature signal (U6, U7), and in that the circuitry for controlling the sampling times comprise two zero-axis crossing detectors (36, 41) for detecting the zero-axis crossings of the first and second quadrature signals (U6, U7) and for generating the control signals (U8, U9) for the instantaneous value samplers (35, 40), the control signals (U9) derived from the zero-axis crossings of the first quadrature signal (U6) being fed to the instantaneous value sampler (40) for the second quadrature signal (U7) to control said instantaneous value sampler (40), and the control signals (U8) derived from the zero-axis crossings of the second quadrature signal (U7) are fed to the instantaneous value sampler (35) for the first quadrature signal (U6) in order to control said instantaneous value sampler (35).

5. A circuit arrangement according to claim 4, characterised in that the circuitry for inverting some of the sampled values (U10, U11) comprises two polarity inverters (44, 46) controllable by control signals (U12, U13) for the sampled values (U10) of the first quadrature signal (U6) and for the sampled values (U11) of the second quadrature signal (U7), and in that the zero-axis crossing detectors (36, 41) are further adapted to generate control signals (U12, U13) for the polarity inverters (44, 46) in dependence on the directions of the zero-axis crossings of the second and of the first quadrature signal (U7, U6).

6. A circuit arrangement according to claim 3, 4 or 5, characterised in that the circuitry for the algebraic summation of the sampled values (U14, U15) having adapted polarities comprises a summator (51) which is controllable by a clock signal (U16) and which has inputs for the sampled values (U14, U15) derived from the first and from the second quadrature signal (U6, U7) and an output for the output signal (U17) signalling the polarity of the assiociated sum, and in that further circuitry (54, 56 – 58) is provided to generate the clock signal (U16) controlling the summator (51), such further circuitry generating the clock signal (U16) in chronological correspondence with the beginning and end of each information bit interval (T) of the binary information of the received signal (U1).

7. A circuit arrangement according to any one of claims 3 to 6, characterised in that the circuitry for algebraic summation of the sampled values (U14, U15) having adapted polarities is further adapted to generate a second output signal (U18) which signals the value of the associated resulting sum and represents the quality of the estimation of the received information symbol («0» or «1»).

## Revendications

1. Procédé pour détecter une information binaire modulée par déplacement de fréquence (FSK) d'un signal de réception (U1) qui est d'abord démodulé en un premier signal déphasé en quadrature (U6) et en un deuxième signal déphasé en quadrature (U7) décalé en phase de 90°, chacun des signaux déphasés en quadrature (U6, U7) étant ensuite converti en une séquence de valeurs d'échantillonnage (U10, U11), caractérisé en ce que la séquence des valeurs d'échantillonnage (U10, U11) correspond directement à l'amplitude et à la polarité du signal déphasé en quadrature concerné existant à l'instant correspondant de l'echantillonnage, les instants de l'échantillonnage étant commandés en fonction des passages par zéro de l'autre signal déphasé en quadrature (U7, U6) correspondant, en ce que les valeurs d'échantillonnage obtenues (U10, U11) sont loit laissées inchangées concernant leur polarité soit inversées en fonction des directions des passages par zéro de l'autre signal déphasé en quadrature correspondant (U7, U6), l'inversion des valeurs d'échantillonnage (U10) du premier signal déphasé en quadrature (U6) et l'inversion des valeurs d'échantillonage (U11) du deuxième signal déphasé en quadrature (U7) étant chaque fois commandée pour des directions opposées des passages par zéro du deuxième signal déphasé en quadrature (U7) et du premier signal déphasé en quadrature (U6), pour produire à l'intérieur de chaque intervalle (T) de bit d'information individuel du signal de réception (U1) des valeurs d'échantillonnage (U14, U15) avec des polarités adaptées à partir des deux signaux déphasés en quadrature (U6, U7), et en ce que toutes les valeurs d'échantillonage (U14, U15) avec des polarités adaptées à l'intérieur de chaque intervalle (T) de bit d'information individuel du signal de réception (U1) sont additionnées algébriquement et le signe de la somme résultante est utilisé comme estimation du symbole d'information reçu («0» ou «1»).

2. Procédé selon la revendication 1, caractérisé en ce que la valeur de la somme résultante de toutes les valeurs d'échantillonnage (U14, U15) à l'intérieur d'un seul intervalle (T) de bit d'information du signal de réception (U1) est utilisée comme mesure de la qualité de l'estimation du symbole d'information reçu («0» ou «1»).

3. Circuit électrique pour détecter une information binaire modulée par déplacement de fréquence (FSK) d'un signal de réception (U1), en particulier pour mettre en œuvre le procédé selon la revendication 1, avec des éléments de circuit (21 – 33) pour démoduler le signal de réception (U1) en un premier signal déphasé en quadrature (U6) et en un second signal déphasé en quadrature (U7) décalé en phase de 90°, et avec des éléments de circuit (35, 40) pour convertir chaque déphasé en quadrature (U6, U7) en une séquence de valeurs d'échantillonnage (U10, U11), caractérisé en ce que les éléments de circuit (35, 40) pour convertir les signaux déphasés en quadrature (U6, U7) sont disposés pour former les valeurs d'échantillonnage (U10, U11) en correspondance directe avec l'amplitude et la polarité du signal déphasé en quadrature concerné existant à l'instant correspondant de l'échantillonnage, en ce que d'autres éléments de circuit (36, 41) sont présents pour commander les instants des échantillonnages en fonction des passages par zéro de l'autre signal déphasé en quadrature correspondant (U7, U6), en ce que d'autres éléments de circuit (44, 46) sont présents pour inverser une partie des valeurs d'échantillonnage (U10, U11) obtenues en dépendance de commande des directions des passages par zéro de l'autre signal déphasé en quadrature (U7, U6) correspondant, de sorte que l'inversion des valeurs d'échantillonnage (U10) du premier signal déphasé en quadrature (U6) et que l'inversion des valeurs d'échantillonnage (U11) du deuxième signal déphasé en quadrature (U7) a lieu à chaque fois pour des directions opposées des passages par zéro du deuxième signal déphasé en quadrature (U7) et du premier signal déphasé en quadrature (U6), pour produire à l'intérieur de chaque intervalle (T) de bit d'information individuel du signal de réception (U1) des valeurs d'échantillonnage (U14, U15) de polarités adaptées à partir des deux signaux déphasés en quadrature (U6, U7), et en ce que d'autres éléments de circuit (51, 54, 56) sont présents pour additionner algébriquement toutes les valeurs d'échantillonnage (U14, U15) avec des polarités adaptées à l'intérieur de chaque intervalle (T) de bit d'information respectif et pour produire un signal de sortie (U17) indiquant le signe de la somme résultante respective, lequel représente une éstimation du symbole d'information reçu («0» ou «1»).

4. Circuit selon la revendication 3, caractérisé en ce que les éléments de circuit pour convertir chacun des signaux déphasés en quadrature (U6, U7) en une séquence de valeurs d'échantillonnage (U10, U11) présentent deux échantillonneurs de valeur instantanée (35, 40) susceptibles d'être commandés par les signaux de commande (U8, U9) pour échantillonner le premier respectivement le deuxième signal déphasé en quadrature (U6, U7), et en ce que les éléments de circuit pour commander les instants des échantillonnages présentent deux détecteurs de passage par zéro (36,

41) pour déterminer les passages par zéro du premier respectivement du deuxième signal déphasé en quadrature (U6, U7) et pour produire les signaux de commande (U8, U9) pour les échantillonneurs de valeur instantanée (35, 40), les signaux de commande (U9) dérivés des passages par zéro du premier signal déphasé en quadrature (U6) étant conduits à l'échantillonneur de valeur instantanée (40) pour le deuxième signal déphasé en quadrature (U7), pour commander cet échantillonneur de valeur instantanée (40), et les signaux de commande (U8) dérivés des passages par zéro du deuxième signal déphasé en quadrature (U7) sont envoyés à l'échantillonneur de valeur instantanée (35) pour le premier signal déphasé en quadrature (U6) pour commander cet échantillonneur de valeur instantanée (35).

5. Circuit selon la revendication 4, caractérisé en ce que les éléments de circuit pour inverser une partie des valeurs d'échantillonnage (U10, U11) présentent deux inverseurs de polarité (44, 46) susceptibles d'être commandés par les signaux de commande (U12, U13) pour les valeurs d'échantillonnage (U10) du premier signal déphasé en quadrature (U6) respectivement pour les valeurs d'échantillonnage (U11) du deuxième signal déphasé en quadrature (U7), et en ce que les détecteurs de passage par zéro (36, 41) sont en outre disposés pour produire les signaux de commande (U12, U13) pour les inverseurs de polarité (44, 46) en fonction des directions des passages par zéro du deuxième respectivement du premier signal déphasé en quadrature (U7, U6).

6. Circuit selon la revendication 3, 4 ou 5, caractérisé en ce que les éléments de circuit pour additionner algébriquement les valeurs d'échantillonnage (U14, U15) avec des polarités adaptées comportent un additionneur (51) susceptible d'être commandé par un signal de synchronisation (U16) avec des entrées pour les valeurs d'échantillonnage (U14, U15) dérivées du premier respectivement du deuxième signal déphasé en quadrature (U6, U7) et avec une sortie pour le signal de sortie (U17) indiquant la polarité de la somme correspondante, et en ce que d'autres éléments de circuit (54, 56 – 58) sont présents pour produire le signal de synchronisation (U16) commandant l'additionneur (51), qui produisent le signal de synchronisation (U16) en coïncidence temporelle avec le début et la fin de chaque intervalle (T) de bit d'information de l'information binaire du signal de réception (U1).

7. Circuit selon l'une des revendications 3 à 6, caractérisé en ce que les éléments de circuit pour additionner algébriquement les valeurs d'échantillonnage (U14, U15) avec des polarités adaptées sont en outre disposés pour produire un deuxième signal de sortie (U18), qui indique la valeur de la somme résultante correspondante et qui représente la qualité de l'estimation du symbole d'information reçu («0» ou «1»).

*Fig. 1*

# Fig.2